# EUROPÄISCHE PATENTANMELDUNG

(11) **EP 2 119 372 A1**
(43) Veröffentlichungstag der Anmeldung: **18.11.2009**
(21) Anmeldenummer: 09156012.8
(22) Anmeldetag: 24.03.2009
(51) Int. Cl.: A23L 1/227, A23L 1/226

(54) **Aromakompositionen und Zubereitungen umfassend N-alpha-beta-Alanyl-Dipeptide**

(30) Priorität: 14.05.2008 DE 102008024206
(71) Anmelder: Symrise GmbH & Co. KG, 37603 Holzminden (DE)
(72) Erfinder: Ley, Jakob Peter, Dr., 37603 Holzminden (DE); van den Bos, Christiaan, 37671 Höxter (DE); Krammer, Gerhard, Dr., 37603 Holzminden (DE); Hofmann, Thomas, Prof. Dr., 85375 Neufahrn / Mintraching (DE); Dunkel, Andreas, 85354 Freising (DE)
(74) Vertreter: Eisenführ, Speiser & Partner

(57) **Zusammenfassung**

Die vorliegende Erfindung betrifft eine Aromakomposition umfassend erfindungsgemäße N^{α}-β-Alanyl-Dipeptide, Zubereitungen, die der Ernährung und/oder dem Genuss dienen, sowie Halbfertigwaren für Zubereitungen, die der Ernährung und/oder dem Genuss dienen umfassend eine oder mehrere erfindungsgemäße Aromakompositionen, sowie Verwendung von erfindungsgemäßen N^{α}-β-Alanyl-Dipeptiden oder erfindungsgemäßen Aromakompositionen zum Erzeugen, Verstärken oder Modifizieren eines Huhngeschmacks, bevorzugt eines "Double Boiled Chicken" Geschmacks.

## Beschreibung

### Technisches Gebiet:

### Hintergrund der Erfindung:

Die vorliegende Erfindung betrifft eine Aromakomposition umfassend erfindungsgemäße N^{α}-β-Alanyl-Dipeptide, Zubereitungen, die der Ernährung und/oder dem Genuss dienen, sowie Halbfertigwaren für Zubereitungen, die der Ernährung und/oder dem Genuss dienen umfassend eine oder mehrere erfindungsgemäße Aromakompositionen, sowie Verwendung von erfindungsgemäßen N^{α}-β-Alanyl-Dipeptiden oder erfindungsgemäßen Aromakompositionen zum Erzeugen, Verstärken oder Modifizieren eines Huhngeschmacks, bevorzugt eines "Double Boiled Chicken" Geschmacks.

Geflügelbrühen, insbesondere Hühnerbrühen und daraus gewonnene Basen sind wichtige Grundlagen für die Herstellung von würzigen Nahrungsmitteln. Durch die inzwischen weit verbreitete Problematik der Übertragung von Infektionskrankheiten durch Geflügel wie z.B. SARS, H5N1-Grippe oder durch *Campylobacter* bzw. *Salmonella ssp*. ausgelöste Lebensmittelvergiftungen besteht ein immer steigender Bedarf an nicht infektiösen, d. h. rekonstituiert und industriell sicheren, sowie einfach zu verwendenden Aromamischungen. Dafür müssen aber Aromakompositionen entwickelt werden, die dem originalen bzw. dem erwünschten Geschmacks- und Geruchsprofil entsprechen, damit eine Einsetzbarkeit durch den Konsumenten gewährleistet ist.

"Double Boiled Chicken" ist ein vor allem in Asien weit verbreitetes Produkt, das als Grundlage für viele würzige Gerichte und Zubereitungen dient. Geschmack und Zubereitungsmethode unterscheiden sich deutlich von vergleichbaren europäischen Zubereitungen einer Hühnerbrühe. Die Herstellung erfolgt in einem doppelwandigen Topf (*slow cooker pot*). Durch den mit Wasser gefüllten Hohlraum werden bei der Zubereitung im Innenraum nur Temperaturen von circa 90°C erreicht. Aufgrund der niedrigen Temperaturen werden längere Zubereitungszeiten notwendig, die können bis zu 24 Stunden betragen.

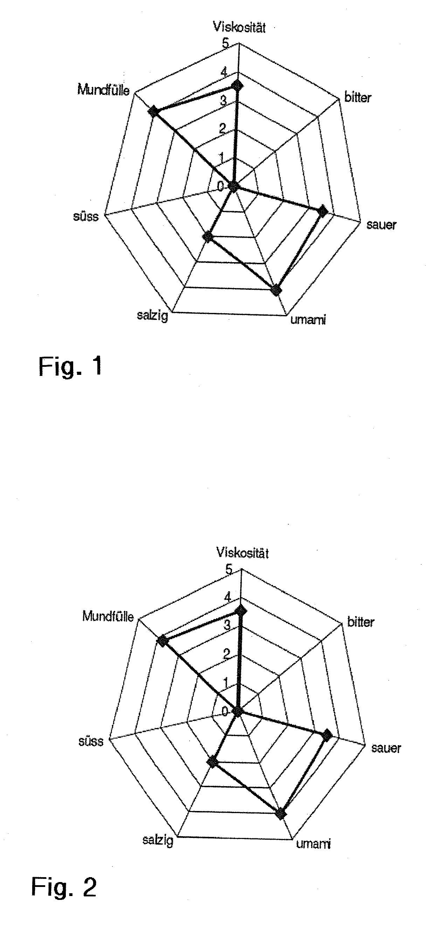

Der Geschmack von "Double Boiled Chicken" zeichnet sich durch seine hohe Intensität i.) für die Deskriptoren unami, sauer, Mundfülle und Viskosität bei gleichzeitig geringer oder fehlender Intensität der Deskriptoren bitter und süß sowie bei ii.) gleichzeitigem Fehlen des starken Huhnaromas, das bei nach traditioneller westeuropäischer Art zubereiteter Hühnerbrühe auftritt, aus (siehe ebenfalls Fig. 1).

Das Aroma von Hühnerfleisch und Hühnerbrühe wurde in der Vergangenheit bereits von verschiedenen Arbeitsgruppen untersucht (Übersicht unter Shi, H. und Ho, C.-T. (1994), In: Flavor of Meat and meat products (Shahidi, F., Hrsg.), Blackie, London, S. 52-70; Gasser, U. und Grosch, W. (1990) Z. Lebensm. Unters. Forsch., 190, S. 3-8), wobei bisher mehr als 450 Verbindungen identifiziert wurden. Studien zu nichtflüchtigen, geschmacksaktiven Verbindungen wurden bisher jedoch noch nicht systematisch verfolgt. Die Arbeiten beschränken sich lediglich auf die quantitative Bestimmung bekannter Inhaltsstoffe, wie beispielsweise von Aminosäuren.

Für rekonstituierte Aromen im Bereich der würzigen Nahrungs- und Genussmittel ist neben der Verwendung der dem Fachmann wohl vertrauten Aromastoffe der Einsatz von nichtflüchtigen geschmacksaktiven Stoffen notwendig, um den Wiedererkennungsgrad für den Konsumenten zu erhöhen. Schon seit langem werden dafür organische Säuren, süße Verbindungen, mineralische Salze, Aminosäuren und Nukleotide gezielt zugesetzt. Ebenso werden isolierte oder weitgehend aufgereinigte pflanzliche, tierische oder Pilz-Proteine sowie deren Teilhydrolysate (Oligopeptide), die durch chemische, fermentative oder enzymatische Synthese gewonnen werden, eingesetzt, um den Geschmack von Nahrungsmitteln positiv zu beeinflussen. Die Herstellung und Auswahl dieser Proteine bzw. Oligopeptide erfolgt aber in der Regel rein empirisch und wird getrieben durch Verfügbarkeit und Machbarkeit sowie anderer physikalischer Parameter (Färbung, Löslichkeit, Einfluss auf Texturparameter wie Viskosität etc.).

Relativ selten wurden gezielt kleine Peptide für die Verwendung als geschmacksbeeinflussende Komponenten isoliert bzw. synthetisiert und dann für die Herstellung von Aromen verwendet. Gründe hierfür bestehen darin, dass viele kleine Peptide, insbesondere Dipeptide, zum einen nur einen schwachen (meist sauren oder schwach süßen) Geschmackseffekt zeigen und daher hoch dosiert werden müssen und zum anderen sogar bitter sind, was die Anwendbarkeit auf Grund des als negativ wahrgenommenen Geschmackseindrucks stark einschränkt (Kirimura, J.; Shimizu, A.; Kimizuka, A.; Ninomiya, T.; Katsuya, N. The Contribution of Peptides and Amino Acids to the Taste of Foodstuffs. J. Agric. Food Chem. 1969, 17 (4), 689-695).

Interessanter sind Dipeptide, die nicht nur auf den 20 sogenannten proteinogenen L-Aminosäuren beruhen, sondern ungewöhnliche Aminosäuren oder ungewöhnliche Verknüpfungen (also nicht C-1-α-Verknüpfung) enthalten. So wurden einige kurzkettige γ-Glutamylpeptide als Geschmacksstoffe beschrieben [Dunkel, A.; Koester, J.; Hofmann, T. Molecular and Sensory Characterization of γ-Glutamyl Peptides as Key Contributors to the Kokumi Taste of Edible Beans (Phaseolus vulgaris L.9. J. Agric. Food Chem. 2007, 55 (16), 6712-6719]. Dabei sind die sonstigen Aminosäuren aber meist schwefelhaltige Varianten wie Cystein, Cystin oder Methionin oder deren Derivate (EP 0 181 421), was die Stabilität solcher Derivate negativ beeinflusst. Es wurde ebenfalls gefunden, dass die Bitterkeit und der schlechte Geschmack von Proteinen durch die Verknüpfung mit einem N-terminalen γ-Glutamylrest reduziert werden kann (Suzuki, H.; Kato, K.; Kumagai, H. Enzymatic synthesis of gammaglutamylvaline to improve the bitter taste of valine. J. Agric. Food Chem. 2004, 52, 577-580); wobei es allerdings nicht das Ziel dieser Studie war, neue, geschmacksmodulierende Peptide zu entwickeln.

Die N^{α}-β-Alanyl-Dipeptide Anserin, Balein, und Carnosin, die jeweils Histidinderivate als C-terminale Aminosäure enthalten, sind als Bestandteile verschiedener Fleischsorten bereits lange bekannt (vgl. Lehrbuch der Lebensmittelchemie; Belitz, Grosch, Schieberle; Springer; 5. Auflage 2001, S.36f). Zudem wurde β-Alanyl-L-lysin, in Rinderhirn und Hasenfleisch [Matsuoka, M.; Nakajima, T.; Sano, I. Identification of alpha-(beta-alanyl-)lysine in rabbit muscle; Biochimica et Biophysica Acta, General Subjects 1969, 177 (1), 169-171] und in Hühnerfleisch [Stutz, M.W.; Savage, J.E.; O'Dell, B.L. Identification of β-alanyl-lysine in chick muscle. Poultry Science 1971, 50 (3), 887-889] gefunden. L-Anserin, L-Balein, und L-Carnosin werden gemäß WO 2006/114918 in Kombination mit Lysin und diversen Mineralsalzen zur Geschmacksmaskierung von Kaliumchlorid, das seinerseits als Kochsalzersatz verwendet wurde und deutlich bittere, unangenehme Geschmacksqualitäten zeigt, eingesetzt. Nun ist aber bekannt, dass sowohl L-Lysin alleine (RU 2,286,071) als auch in Kombination mit Adipinsäure (WO 2006/066716) bitter maskierende Effekte in Zubereitungen mit einem hohem Kaliumgehalt zeigen.

β-Alanyl-L-Lysin hingegen wurde laut Tada, M.; Shinoda, I.; Okai, H. J. Agric. Food Chem. 1984, 32 (5), 992-996 nur mit einem leicht sauren und süßen Eigengeschmack beschrieben. Eine Verwendung von β-Alanyl-L-Lysin in würzigen Anwendungen wurde deshalb nicht nahegelegt, da die Verbindung als solche weder einen salzigen noch einen Umami-Geschmackseindruck verursachte.

β-Alanyl-L-Tryptophan wurde bisher als Syntheseprodukt ohne spezifische Geschmackseindrücke beschrieben (Schmidt, B.F.; Hernandez, L.; Rouzer, C.; Czerwinski, G.; Chmurny, G.; Michejda, C.J.. J. Med. Chem. 1994, 37 (22), 3812-3818). Lediglich β-Alanyl-L-Ttryptophan wurde zudem bisher nicht in Lebensmitteln gefunden.

Weitere direkte geschmackliche Eigenschaften für die vorstehenden Dipeptide wurden bisher nicht beschrieben. Eine generelle Verwendbarkeit von N^{α}-β-Alanyl-Dipeptiden als Geschmacksverstärker bzw. -modulatoren kann aus der vorliegenden Literatur nicht abgeleitet werden.

In gekochtem Hühnerfleisch konnten bislang ca. 190 flüchtige Verbindungen als Aromastoffe identifiziert werden, u.a. (in abnehmender Häufigkeit) Aldehyde, Kohlenwasserstoffe, Alkohole, Ketone, schwefelhaltige Verbindungen, Amine, Lactone, Furane, Carbonsäuren und Phenole. Durch Entfernen der schwefelhaltigen Verbindungen kann der fleischige Geruchseindruck und durch Entfernen der Carbonylverbindungen das typisch huhnartige Aroma verloren gehen. Daraus folgerten Kerler *et. al*, dass sowohl die Schwefelverbindungen als auch die Carbonylverbindungen für den Geruchseindruck von gekochtem Hühnerfleisch von Bedeutung sind, insbesondere Methanthiol, (E,E)-2,4-Decadienal, (E,Z)-2,4-Decadienal (E,E)-2,4-Nonadienal, 2-Furfurylthiol, Hexanal, (E)-2-Nonenal, Acetaldehyd, 1-Octen-3-on, Dimethyltrisulfid und 4-Hydroxy-2,5-dimethyl-3(2H)-furanon spielen eine herausragende Rolle für gekochtes Hühnerfleisch (Kerler J., Grosch W. Character impact odorants of boiled chicken: Changes during refrigerated storage and reheating. Z. Lebensm. Unters. Forsch. 1997, 205, 232-238).

Im Gegensatz zu dem Aroma von gekochtem Huhn ist das Aroma von Hühnerbrühe bislang relativ wenig untersucht worden. Frühere Untersuchungen zeigten für klassisch zubereitete Hühnerbrühen (vgl. Kerler-Publikation, *ibid*.). Jedoch weicht die Zubereitungsart dieser Hühnerbrühen erheblich von "Double Boiled Chicken" ab.

Die Aufgabe der vorliegenden Erfindung bestand darin, eine Aromakomposition bereitzustellen, die i) das ungewöhnliche Aroma, d. h. den Geschmack und/oder Geruch von "Double Boiled Chicken" mit hohen Intensitäten für die Deskriptoren umami, sauer, Mundfülle und Viskosität und gegebenenfalls gleichzeitig geringer bis keiner Intensität für die Deskriptoren bitter und süß erzeugt, verstärkt und/oder modifiziert, ii) nicht infektiös ist, d. h. rekonstituiert und industriell sicher ist (also auf Rekombinaten beruht) und iii) optional durch einfaches Mischen der Einzelstoffe erhalten werden kann.

### Zusammenfassung der Erfindung:

Die vorliegende Aufgabe wird ganz oder teilweise durch die Gegenstände der unabhängigen Ansprüche gelöst.

Demnach betrifft ein erster Erfindungsgegenstand eine Aromakomposition umfassend oder bestehend aus Aromakomposition umfassend oder bestehend aus
i. ein, zwei, drei, vier oder fünf N^{α}-β-Alanyl-Dipeptiden, ausgewählt aus der Liste bestehend aus: β-Alanyl-L-tryptophan, β-Alanyl-L-lysin, β-Alanyl-glycin, β-Alanyl-L-alanin und/oder β-Alanyl-L-phenylalanin,
   und
ii. einer, zwei, drei oder mehrere Verbindungen jeweils ausgewählt aus (a) Aminosäuren sowie deren Salze und Solvate, (b) zur Ernährung geeigneten anorganischen Salzen sowie deren Solvate und (c) mono- oder polyvalenten organischen Genusssäuren sowie deren Stereoisomere, Salze und/oder Solvate.

Gemäß einem zweiten Erfindungsgegenstand betrifft die vorliegende Erfindung eine Zubereitung, die der Ernährung und/oder dem Genuss dient, sowie Halbfertigware für eine Zubereitung, die der Ernährung und/oder dem Genuss dient, **dadurch gekennzeichnet, dass** die Zubereitung oder Halbfertigware folgende Komponenten umfasst oder daraus besteht:
(i) eine geschmacklich wirksame Menge einer oder mehrere erfindungsgemäßer Aromakompositionen und
(ii) eine oder mehrere geeignete Grund-, Hilfs- oder Zusatzstoffe

Ein dritter erfindungsgemäßer Gegenstand betrifft die Verwendung von β-Alanyl-L-tryptophan als Geschmacksstoff.

Ein vierter erfindungsgemäßer Gegenstand betrifft die Verwendung von
(a) ein, zwei, drei, vier oder mehreren N^{α}-β-Alanyl-Dipeptiden ausgewählt aus der Gruppe bestehend aus β-Alanyl-L-Tryptophan, β-Alanyl-L-Lysin, β-Alanyl-Glycin, β-Alanyl-L-Alanin und/oder β-Alanyl-L-Phenylalanin oder
(b) der erfindungsgemäßen Aromakomposition zum Erzeugen, Verstärken oder Modifizieren eines Huhngeschmacks.

Ein fünfter erfindungsgemäßer Gegenstand betrifft die Verwendung von
(a) ein, zwei, drei, vier oder mehreren N^{α}-β-Alanyl-Dipeptiden ausgewählt aus der Gruppe bestehend aus β-Alanyl-L-Tryptophan, β-Alanyl-L-Lysin, β-Alanyl-Glycin, β-Alanyl-L-Alanin und/oder β-Alanyl-L-Phenylalanin oder
(b) der erfindungsgemäßen Aromakomposition zur Herstellung von erfindungsgemäßen Zubereitungen und Halbfertigwaren.

Ein sechster erfindungsgemäßer Gegenstand betrifft ein Verfahren zum Erzeugen, Verstärken oder Modifizieren eines Huhngeschmacks einer erfindungsgemäßen Zubereitung oder Halbfertigware, **dadurch gekennzeichnet, dass** das Verfahren folgende Schritte umfasst oder daraus besteht:
(a) Bereitstellen einer oder mehrerer erfindungsgemäßer Aromakompositionen,
(b) Bereitstellen eines oder mehrerer Grund-, Hilfs- und/oder Zusatzstoffe und
(c) Vermischen einer geschmacklich wirksamen Menge des oder der Aromakompositionen aus Schritt (a) mit dem oder den Grund-, Hilfs- und/oder Zusatzstoffen gemäß Schritt (b) oder
(d) Sprühtrocknung einer geschmacklich wirksamen Menge des oder der Aromakompositionen aus Schritt (a) mit dem oder den Grund-, Hilfs- und/oder Zusatzstoffen gemäß Schritt (b).

Soweit für die vorliegende Erfindung Mengenangaben gemacht werden, so beziehen sich die Mengenangaben - sofern keine gegenteiligen Aussagen gemacht werden - auf Gewichtsangaben, insbesondere Gewichtsprozentanteile (Gew.-%) bezogen auf die jeweilige Aromakomposition oder Zubereitung/Halbfertigware.

Die erfindungsgemäßen Gegenstände umfassen ebenfalls in jeder denkbaren Kombination die bevorzugten Ausgestaltungen, wie sie in der nachfolgenden Beschreibung, Ausführungsbeispielen und abhängigen Ansprüchen dargestellt werden.

### Kurze Figurenbeschreibung:

Figur 1 zeigt ein Geschmacksnetz für das Geschmacksprofil einer Hühnerbrühe ("Double Boiled Chicken).
Figur 2 zeigt ein Geschmacksnetz einer erfindungsgemäßen Aromakomposition D.
Figur 3 zeigt einen Vergleich des Geschmacksprofils einer Hühnerbrühe ("Double Boiled Chicken") mit einer erfindungsgemäßen Hühnerbrühe.

### Detaillierte Beschreibung der Erfindung:

Überraschend wurde nun gefunden, dass die erfindungsgemäße Aromakombination eine hervorragende Basis zur Herstellung von der Ernährung und/oder dem Genuss dienenden Zubereitungen wie z.B. Brühen mit Hühnerfleisch-Charakter, insbesondere "Double Boiled Chicken"-Charakter darstellt, da eine erfindungsgemäße Aromakomposition hohe Intensitäten für die Deskriptoren umami, sauer, Mundfülle und/oder Viskosität bei gegebenenfalls gleichzeitiger geringer bis keiner Intensität für die Deskriptoren bitter und süß hervorrufen. Es wurde weiterhin gefunden, dass das Weglassen nur einer der Komponenten i., ii. (a), (b) oder (c) zum vollständigen Verlust des Geschmacksprofils führt (siehe Ausführungsbeispiele). Die erfindungsgemäßen Deskriptoren können über Standardverbindungen definiert und durch Verkostung erfahren werden: für süß z.B. Saccharose, für sauer z.B. Milchsäure, für Mundfülle und/oder Viskosität z.B. eine Gelatinelösung, für bitter z.B. Coffein, für salzig z.B. Natriumchlorid und für umami z.B. Mononatriumglutamat.

Die erfindungsgemäß zu verwendenden Aminosäuren sowie deren Salze und/oder Solvate, bevorzugt Hydrate, gemäß Komponente ii) (a) werden bevorzugt ausgewählt aus der Gruppe bestehend aus Glycin, L-Alanin, L-Valin, L-Leucin, L-Isoleucin, L-Glutaminsäure, Pyroglutaminsäure, L-Glutamin, L-Asparaginsäure, L-Asparagin, L-Serin, L-Homoserin, L-Threonin, L-Phenylalanin, L-Tyrosin, L-Tryptophan, L-Histidin, L-Lysin, L-Arginin, L-Methionin, L-Prolin, L-Hydroxyprolin, L-Cystein, L-Cystin, L-Homocystein, L-Citrullin, L-Ornithin, α-L-Aminoadipinsäure, γ-Aminobuttersäure und/oder Taurin. Weiter bevorzugt werden die erfindungsgemäß zu verwendenden Aminosäuren sowie deren Salze und/oder Solvate, bevorzugt Hydrate, gemäß Komponente ii. (a) ausgewählt aus der Gruppe bestehend aus L-Glutaminsäure, L-Asparaginsäure und/oder Taurin.

Die erfindungsgemäß zu verwendenden Aminosäuren sowie deren Salze und/oder Solvate, bevorzugt Hydrate gemäß Komponente ii. (a) können auch in Form von Gemischen aus enzymatisch, fermentativ oder synthetisch gewonnenen Proteinhydrolysaten vorliegen.

Die erfindungsgemäß zu verwendenden zur Ernährung geeigneten anorganischen Salze sowie deren Solvate, bevorzugt Hydrate, gemäß Komponente ii. (b) werden bevorzugt ausgewählt aus der Gruppe bestehend aus Natrium-, Kalium-, Calcium-, Magnesium und/oder Ammoniumsalzen mit mono- oder polyvalenten anorganischen Gegenionen. Die Gegenionen werden bevorzugt ausgewählt aus der Gruppe bestehend aus Hydroxiden, Phosphaten, Hydrogenphosphaten, Dihydrogenphosphaten, Pyrophosphaten, Hydrogenpyrophosphaten, Polyphosphaten, Chloriden, Carbonaten, Bicarbonaten, Sulfaten, Hydrogensulfaten, Nitriten und/oder Nitraten. Ganz besonders bevorzugt werden die erfindungsgemäß zu verwendenden zur Ernährung geeigneten anorganischen Salze sowie deren Solvate, bevorzugt Hydrate, gemäß Komponente ii. (b) ausgewählt aus der Gruppe bestehend aus Kaliumdihydrogenphosphat, Kaliumhydroxid partiell neutralisiert mit Salzsäure (HCI), Natriumchlorid und/oder Ammoniumchlorid.

Die erfindungsgemäß zu verwendenden zur Ernährung geeigneten anorganischen Salze sowie deren Solvate, bevorzugt Hydrate, gemäß Komponente ii. (b) können dementsprechend als wasserfreie oder wasserhaltige Kristalladdukte vorliegen und es können gegebenenfalls - im Falle von nicht-pH-neutralen anorganischen Salzen - eine oder mehrere auf den oben genannten Ionen basierende Säuren bzw. Basen zur Neutralisation zugegeben werden, damit die Salze zur Nahrungsaufnahme geeignet sind.

Die erfindungsgemäß zu verwendenden mono- oder polyvalenten organischen Genusssäuren sowie deren Stereoisomere, bevorzugt Enantiomere und Diastereomere, Solvate, bevorzugt Hydrate, und/oder Salze gemäß Komponente ii. (c) werden weiter bevorzugt ausgewählt aus der Gruppe bestehend aus D-, L- oder D/L-Milchsäure, Propionsäure, Citronensäure, Bernsteinsäure, Fumarsäure, Maleinsäure, Äpfelsäure und deren (Stereo-)Isomere, Traubensäure, Weinsäure und deren (Stereo-)Isomere, Malonsäure, Glutarsäure, Schleimsäure und/oder Hydroxyzitronensäure. Besonders bevorzugt wird Milchsäure als die erfindungsgemäß zu verwendenden mono- oder polyvalenten organische Genusssäure sowie deren Stereoisomere, bevorzugt Enantiomere und Diastereomere, Solvate, bevorzugt Hydrate, und/oder Salze gemäß Komponente ii. (c) verwendet.

Die erfindungsgemäß zu verwendenden Nukleoside und/oder Nukleotide gemäß Komponente iii. (d) werden bevorzugt ausgewählt aus der Gruppe bestehend aus Adenin, Adenosin, Cytosin, Cytidin, Guanin, Guanosin, Uracil, Uridin, Thymin, Thymidin, Inosin, Xanthin, Xanthosin, Hypoxanthin, 3'-IMP, 5'-IMP, 3'-AMP, 5'-AMP, 3'-GMP, 5'-GMP, 3'-UMP, 5'-UMP, 3'-CMP, 5'-CMP, 3'-XMP, 5'-XMP, 3',5'-cAMP, 3',5'-cIMP, 3',5'-cUMP, 3',5'-cCMP, 3',5'-cGMP, ADP, ATP, UDP, UTP, GDP, GTP, CDP, CTP, 3'-dIMP, 5'-dIMP, 3'-dAMP, 5'-sAMP, 3'-sGMP, 5'-sGMP, 3'-sTMP, 5'-dTMP, 3'-dCMP, 5'-dCMP, 3',5'-cdAMP, 3',5'-cdTMP, 3',5'-cdCMP, 3',5'-cdGMP, 3'-dXMP, 5'-dXMP, dADP, dATP, dUDP, dTTP, dGDP, dGTP und/oder dCDP, dCTP. Die erfindungsgemäß zu verwendenden Nukleoside und/oder Nukleotide gemäß Komponente iii. (d) werden weiter bevorzugt ausgewählt aus der Gruppe bestehend aus Hypoxanthin, 5'-IMP, 3'-AMP, 5'-AMP, 3'-GMP, 5'-GMP, 3',5'-cAMP, 3',5'-cGMP, ADP und/oder ATP und ganz besonders bevorzugt aus der Gruppe bestehend aus 5'-IMP, 3'-AMP und/oder 5'-AMP.

Die erfindungsgemäß zu verwendenden Nukleoside und/oder Nukleotide gemäß Komponente iii. (d) können auch als Gemisch in Form von aufgeschlossenem Zellmaterial, insbesondere in Form von Hefeextrakten vorliegen.

Die erfindungsgemäß zu verwendenden Kohlenhydrate gemäß Komponente iii. (e) werden bevorzugt ausgewählt aus der Gruppe bestehend aus D-Glucose, D-Fructose, Sorbose, Tagatose, Ribose, Arabinose, Saccharose, Maltose, Maltobiose, Maltotriose, Lactose, Galactose und Mannose. Bevorzugt sind hierbei D-Glucose, D-Fructose, Saccharose, Maltose, Maltobiose, Maltotriose und Lactose.

Erfindungsgemäß werden als der oder die Aromastoffe gemäß Komponente iv. üblicherweise synthetische, natürliche und/oder naturidentische Aromastoffe verwendet. Gemäß vorliegender Erfindung stellt der Aromastoff dabei vorzugsweise eine sensorisch wirksame Verbindung mit einem Dampfdruck von größer oder gleich 0,01 Pa bei 25°C, vorzugsweise mit einem Dampfdruck von größer oder gleich 0,025 Pa bei 25°C dar. Weiter bevorzugt werden erfindungsgemäß sogenannte "flüchtigen Aromastoffe" mit einem Dampfdruck von größer oder gleich 1 Pa bei 25°C verwendet.

Beispiele für Aromastoffe, die als Komponente iv. der erfindungsgemäßen Aromakomposition verwendet werden können, finden sich z.B. in K. Bauer, D. Garbe und H. Surburg, Common Fragrance and Flavor Materials, 4th. Ed., Wiley-VCH, Weinheim 2001.

Der oder die erfindungsgemäß zu verwendenden Aromastoffe gemäß Komponente iv. werden bevorzugt ausgewählt aus der Gruppe bestehend aus flüchtigen organischen Säuren (gesättigt und ungesättigt), weiter bevorzugt Essigsäure, Buttersäure, 2- bzw. 3-Methylbuttersäure, Caprinsäure, Capronsäure, Phenylessigsäure; Alkohole (gesättigt und ungesättigt), weiter bevorzugt Ethanol, Propylenglykol, 1,3-Octenol, cis-3-Hexenol, Linalool, Benzylalkohol, p-Kresol, 2,6-Dimethylthiophenol, Guajacol, Eugenol; Sulfide und Disulfide, weiter bevorzugt Dimethylsulfid, Difurfuryldisulfid, Methylthiopropanal, 2-Methyl-3-methyldithiofuran und Bis(2-methyl-3-furyl)disulfid; Thiole, weiter bevorzugt Methylfuranthiol, 2-(4-methyl-1,3-thiazol-5-yl)ethanol (Sulfurol), Methyltetrahydrofuranthiol, 3-Methyl-2-buten-1-thiol, 3-Thio-2-methylpentanol,
2-Furfurylthiol, Thiophenol, 2-Methylthiophenol und 2-Mercaptobutanon; Pyridine, weiter bevorzugt 2-Acetylpyridin; Pyrazine, weiter bevorzugt Methylpyrazin, 2,5-Methylethylpyrazin, 2,3,5-Trimethylpyrazin, Acetylpyrazin, 2,3-Diethyl-5-methylpyrazin, 2-Ethyl-3,5-dimethylpyrazin und 2-Isopropyl-3-methoxypyrazin; Thiazole, weiter bevorzugt 2-Acetylthiazol; Thiazoline, weiter bevorzugt 2-Acetyl-2-thiazolin; Pyrroline, weiter bevorzugt 2-Propionyl-1pyrrolin und 2-Acetyl-1-pyrrolin; Aldehyde, weiter bevorzugt Acetaldehyd, *trans-4,5-*Epoxy-(2E)-decenal, *cis*-4,5-F-poxy-(2*E*)-decenal, (E,E)-2,4-Undecadienal, (E,E)-2,4-Decadienal, (E,Z)-2,4-Decadienal, (E,E,Z)-2,4,6-Nonatrienal, (E,E)-2,4-Nonadienal, (E)-2-Undecenal, (Z)-2-Decenal, (E)-2-Decenal, (E)-2-Nonenal, (Z)-2-Nonenal, (E,Z)-2,6-Nonadienal, (E,E)-2,4-Nonadienal, (E)-2-Octenal, 3-Methylbutanal, Octanal, Hexanal, 3-Methylthiopropanal (Methional), Vanillin und Phenylacetaldehyd; Ketone, weiter bevorzugt 1-Octen-3-on, (Z)-1,5-Octadien-3-on, 3,4-Dimethylcyclopentan-1,2-dion, 3-Hydroxy-4,5-dimethylfuran-2(5*H*)-on (Sotolon), 2-Aminoacetophenon, 3-Hydroxy-4,5-dimethyl-2(5H)-furanon, 2,5-Dimethyl-4-hydroxy-3[2H]-furanon (Furaneol^{©}), Tetrahydrothiophen-3-on und 3-Thiobutan-2-on; Ester und Lactone, weiter bevorzugt Methylbutanoat, Ethyl-3-methylbutanoat, Propyl-2-methylbutanoat, (Z)-6-Dodecen-γ-lacton, 4-Hydroxy-2-nonensäurelacton, δ-Undecalacton, γ-Nonalacton und γ-Octalacton; und heterocyclische Aromaten, weiter bevorzugt Indol und Skatol.

Die erfindungsgemäße Aromakomposition kann zusätzlich auch ein oder mehrere N^{α}-β-Alanyl-Dipeptid-Verbindungen ausgewählt aus L-Carnosin, L-Balein und L-Anserin, die bekannte Fleischinhaltstoffe darstellen, umfassen oder daraus bestehen.

Der oder die Aromastoffe gemäß Komponente iv. können auch in Form von Reaktionsaromen (Maillard-Produkte), Extrakten bzw. ätherischen Ölen von Pflanzen oder Pflanzenteilen bzw. Fraktionen davon, Raucharomen oder andere aromagebende Zubereitungen (z.B. Protein[teil]hydrolysaten, Grillaromen, Pflanzenextrakten, Gewürzen, Gewürzzubereitungen, Gemüsesorten und/oder Gemüsezubereitungen eingesetzt werden. Insbesondere sind hierfür Aromstoffe oder deren Bestandteile geeignet, die nicht in den Komponenten i., ii. und iii. umfasst sind und einen röstigen, fleischigen (insbesondere Huhn, Fisch, Meerestiere, Rind, Schwein, Lamm, Schaf, Ziege), gemüsigen (insbesondere Tomate, Zwiebel, Knoblauch, Sellerie, Lauch, Pilze, Auberginen, Seetang), einen würzigen (insbesondere schwarzer und weißer Pfeffer, Chili, Paprika, Kardamom, Muskat, Piment, Senf und Senf-Produkte), gebratenen, hefigen, gesottenen, fettigen, salzigen und/oder scharfen Aromaeindruck verursachen und somit den würzigen Eindruck der Komponenten i. und ii. sowie gegebenenfalls iii. verstärken können. In der Regel enthalten die erfindungsgemäßen Aromakompositionen zwei, drei oder mehrere Aromastoffe als Komponente iv.

Üblicherweise liegen in den erfindungsgemäßen Aromakompositionen die Gewichtsverhältnisse von dem oder den N^{α}-β-Alanyl-Dipeptiden der Komponente i. zu der Summe der Verbindungen der Komponente ii. im Bereich von 50:1 bis 1:50. Bevorzugt liegen die Gewichtsverhältnisse im Bereich von 10:1 bis 1:10, besonders bevorzugt von 1:3 bis 3:1. Die Gewichtsverhältnisse der Verbindung der Gruppe ii. (a), ii. (b) und ii. (c) liegen in einem Dreiecks-Verhältnis (gewichtsbezogen) von üblicherweise 10:1:1 bis 1:10:1 bzw. bis 1:1:10 vor, bevorzugt in einem Dreiecks-Verhältnis von 3:1:1 bis 1:3:1 bzw. bis 1:1:3 vor.

Üblicherweise liegt in den erfindungsgemäßen Aromakompositionen das oder die Nukleotide und Nukleoside der Komponente iii. (d) zur Summe aller anderen Komponenten i., ii. iii.(e) und iv. in einem Gewichtsverhältnis im Bereich von 1:2000 bis 1:20, bevorzugt in einem Verhältnis von 1:1000 bis 1:100 vor.

Üblicherweise liegt in den erfindungsgemäßen Aromakompositionen das oder die Kohlenhydrate der Komponente iii. (e) zur Summe aller anderen Komponenten i., ii., iii. (d) und iv. in einem Gewichtsverhältnis im Bereich von 1:1000 bis 10:1, bevorzugt in einem Verhältnis von 1:200 bis 1:1 1 vor.

Üblicherweise liegt in den erfindungsgemäßen Aromakompositionen der oder die Aromastoffe der Komponente iv. zur Summe aller anderen Komponenten i., ii. und iii. in einem Gewichtsverhältnis im Bereich von 1:1000 bis 10:1, bevorzugt in einem Verhältnis von 1:500 bis 1:1 vor.

In einer weiteren bevorzugten Ausgestaltung liegen erfindungsgemäße Aromakompositionen sprühgetrocknet vor. Vorteilhaft an der bevorzugt sprühgetrockneten Ausgestaltung der erfindungsgemäßen Aromakompositionen ist, dass die Einzelkomponenten inniger vermischt und - vorzugsweise durch die Verwendung von geschmacklich nahezu irrelevanten Trägerstoffen - die Aromastoffe teilweise eingeschlossen vorliegen bei gleichzeitig vergrößerter Oberfläche, wodurch einerseits eine Stabilisierung der noch nicht in die Zubereitung eingebrachten Aromakompositionen gegen äußere Einflüsse (Licht, Sauerstoffe, Hitze, Feuchtigkeit) und andererseits eine schnellere Auflösung der so hergestellten sprühgetrockneten Aromakompositionen in wässriger Umgebung erreicht wird.

Gemäß einem weiteren Aspekt betrifft die vorliegende Erfindung auch eine der Ernährung oder dem Genuss dienenden Zubereitung sowie Halbfertigwaren für Zubereitungen, die der Ernährung und/oder dem Genuss dienen, umfassend oder bestehend aus (i) einer geschmacklich wirksamen Menge einer oder mehrer erfindungsgemäßer Aromakompositionen sowie (ii) einem oder mehreren weiteren zum Verzehr geeigneten Grund-, Hilfs- und/oder Zusatzstoffen. Die bevorzugten Ausgestaltungen der erfindungsgemäßen Aromakomposition sind ebenfalls erfindungsgemäß für die der Ernährung, der Mundpflege und dem Genuss dienenden Zubereitungen bzw. deren Halbfertigwaren zu verwenden.

Die erfindungsgemäßen der Ernährung und/oder dem Genuss dienenden Zubereitungen (Zusammensetzungen) sind regelmäßig Produkte, die dazu bestimmt sind, in die menschliche Mundhöhle eingebracht zu werden, dort eine bestimmte Zeit zu verbleiben und anschließend entweder verzehrt (z.B. verzehrfertige Lebensmittel, siehe auch weiter unten) oder wieder aus der Mundhöhle entfernt zu werden (z.B. Kaugummis oder Zahnpasta). Zu diesen Produkten gehören dabei sämtliche Stoffe oder Erzeugnisse, die dazu bestimmt sind, in verarbeitetem, teilweise verarbeitetem oder unverarbeitetem Zustand vom Menschen aufgenommen zu werden. Hierzu zählen auch Stoffe, die Lebensmitteln bei ihrer Herstellung, Verarbeitung oder Bearbeitung zugesetzt werden und dazu vorgesehen sind, in die menschliche Mundhöhle eingebracht zu werden.

Im Rahmen der vorliegenden Erfindung werden unter dem Begriff "Lebensmittel" insbesondere Stoffe verstanden, die dazu bestimmt sind, in unverändertem, zubereitetem oder verarbeitetem Zustand vom Menschen geschluckt und dann verdaut zu werden; als Lebensmittel werden insoweit auch Umhüllungen, Überzüge oder sonstige Umschließungen verstanden, die dazu bestimmt sind, mitverschluckt zu werden, oder bei denen ein Verschlucken vorauszusehen ist. Auch bestimmte Produkte, die üblicherweise wieder aus der Mundhöhle entfernt werden (z.B.

Kaugummis) sind im Rahmen des vorliegenden Textes als Lebensmittel zu verstehen, da bei ihnen nicht auszuschließen ist, dass sie zumindest teilweise geschluckt werden.

Im Rahmen der vorliegenden Erfindung ist unter einem "verzehrfertigen Lebensmittel" ein Lebensmittel zu verstehen, das hinsichtlich der für den Geschmack maßgeblichen Substanzen bereits vollständig zusammengesetzt ist. Unter den Begriff "verzehrfertiges Lebensmittel" fallen auch Getränke sowie feste oder halbfeste verzehrfertige Lebensmittel. Als Beispiele seien genannt Tiefkühlprodukte, die vor dem Verzehr aufgetaut und auf Verzehrtemperatur erwärmt werden müssen. Auch Produkte wie Joghurt oder Eiscreme aber auch Kaugummis oder Hartkaramellen zählen zu den verzehrfertigen Lebensmitteln.

Die erfindungsgemäßen Halbfertigwaren dienen in der Regel zur Herstellung von der Ernährung, der Mundpflege oder dem Genuss dienenden erfindungsgemäßen Zubereitungen. Insbesondere können erfindungsgemäß der Ernährung oder dem Genuss dienende Halbfertigwaren zur additiven Verstärkung des Huhn-, bevorzugt "Double Boiled Chicken"-Geschmacks/Geruchs in Nahrungs-/Genussmitteln und auch direkt als Würze für industrielle und nicht-industrielle Zubereitung von Nahrungs-/Genussmitteln verwendet werden.

In einer weiteren bevorzugten Ausgestaltung umfasst eine erfindungsgemäße Zubereitung, die der Ernährung und/oder dem Genuss dient, sowie deren Halbfertigwaren, als Teil- vollständige Komponente (ii) einen oder mehrere zum Verzehr geeignete feste Trägerstoffe.

Vorteilhafte erfindungsgemäß zu verwendende Trägerstoffe werden ausgewählt aus der Gruppe bestehend aus Siliciumdioxid (Kieselsäure, Kieselgel), Kohlenhydrate und/oder Kohlenhydratpolymere (Polysaccharide), Cyclodextrine, Stärken, abgebaute Stärken (Stärkehydrolysate), chemisch oder physikalisch modifizierte Stärken, modifizierte Cellulosen, Gummi Arabicum, Ghatti-Gummi, Traganth, Karaya, Carrageenan, Guarkernmehl, Johannisbrotkernmehl, Alginate, Pektin, Inulin oder Xanthan Gum zu nennen. Bevorzugte Stärkehydrolysate sind Maltodextrine und/oder Dextrine, weiter bevorzugt aus Siliciumdioxid, Gummi Arabicum und/oder Maltodextrine, wobei hier wiederum Maltodextrine mit DE-Werten im Bereich 5 bis 20 besonders bevorzugt sind. Es ist dabei unerheblich, welche Pflanze ursprünglich die Stärke zur Herstellung der Stärkehydrolysate geliefert hat. Geeignet und leicht verfügbar sind Mais-basierende Stärken sowie Stärken aus Tapioka, Reis, Weizen oder Kartoffeln. Die Trägerstoffe können dabei auch als Fließhilfsmittel fungieren, wie beispielsweise Siliciumdioxid.

Die erfindungsgemäßen Zubereitungen, die der Ernährung und/oder dem Genuss dienen, sowie deren Halbfertigwaren und neben der oder den die erfindungsgemäßen Aromakompositionen noch einen oder mehrere feste Trägerstoffe umfassen, können beispielsweise durch mechanische Mischvorgänge, wobei gleichzeitig auch eine Zerkleinerung der Partikel der vorliegende Partikel erfolgen kann, oder mittels Sprühtrocknung hergestellt werden. Bevorzugt sind erfindungsgemäße Zubereitungen und Halbfertigwaren, die feste Trägerstoffe umfassen und mittels Sprühtrocknung hergestellt sind; hinsichtlich der Sprühtrocknung wird verwiesen auf US 3,159,585, US 3,971,852, US 4,532,145 oder US 5,124,162, deren Inhalte hierzu in die vorliegende Anmeldung inkorporiert werden.

Bevorzugte erfindungsgemäß Trägerstoffe umfassende Zubereitungen, die der Ernährung und/oder dem Genuss dienen und sowie vorzugsweise mittels Sprühtrocknung hergestellt werden, besitzen eine mittlere Partikelgröße im Bereich von 30 - 300 µm und eine Restfeuchte von kleiner oder gleich 5 Gew.-%.

Das Gewichtsverhältnis der Gesamtmasse der erfindungsgemäßen Aromakomposition zu dem oder den zur Ernährung geeigneten festen Trägerstoffen liegt üblicherweise im Bereich von 1:10 bis 1:100000, bevorzugt im Bereich von 1:100 bis 1:20000, besonders bevorzugt im Bereich von 1:1000 bis 1:5000, jeweils bezogen auf die Trockenmasse der erfindungsgemäßen Zubereitung bzw. deren Halbfertigwaren.

Die Summe der Bestandteile von (i) erfindungsgemäßer Aromakomposition und dem bzw. den Trägerstoffen in der Zusammensetzung liegt vorzugsweise im Bereich von 70 bis 100 Gew.-%, bevorzugt im Bereich von 85 bis 100 Gew.-% jeweils bezogen auf die erfindungsgemäßen Zubereitungen/Halbfertigwaren.

In einer weiteren bevorzugten Ausgestaltung ist eine erfindungsgemäße Zubereitung, die der Ernährung und/oder dem Genuss dient, oder deren Halbfertigwaren vorzugsweise sprühgetrocknet. Vorteilhaft an der bevorzugt sprühgetrockneten Ausgestaltung der erfindungsgemäßen Zubereitung bzw. deren Halbfertigware ist, dass die Einzelkomponenten inniger vermischt und - vorzugsweise durch die Verwendung von geschmacklich nahezu irrelevanten Trägerstoffen - die Aromastoffe teilweise eingeschlossen vorliegen bei gleichzeitig vergrößerter Oberfläche, wodurch einerseits eine Stabilisierung gegen äußere Einflüsse (Licht, Sauerstoffe, Hitze, Feuchtigkeit) und andererseits eine schnellere Auflösung der so hergestellten sprühgetrockneten erfindungsgemäßen Zubereitungen oder Halbfertigwaren in wässriger Umgebung erreicht wird.

In der folgenden Tabelle 1 sind die wichtigsten Aromastoffe mit ihrer optimalen Konzentration sowie der möglichen Schwankungsbreite bezogen auf das Gesamtgewicht der fertigen der Ernährung, der Mundpflege und der dem Genuss dienenden Zubereitung angegeben:

**Tabelle 1**

| **Aromastoff** | **Konzentration [µg/kg Zubereitung/Halbfertigware]** | |
|---|---|---|
| | Mittelwert^{a)} | Schwankungsbereich^{b)} |
| Essigsäure | 319000 | 338800 - 301000 |
| Buttersäure | 1800 | 1300 - 2300 |
| Acetaldehyd | 515 | 490 - 570 |
| 2/3-Methylbuttersäure | 157 | 146 - 168 |
| 4-Hydroxy-2,5-dimethyl-3(2H)-furanon (Furaneol^{©}) | 113 | 82 - 144 |
| Hexanal | 103 | 99 - 108 |
| Vanillin | 44 | 41 - 46 |
| (E)-2-Decenal | 35 | 34 - 35 |
| 3-(Methylthio)-propanal | 30 | 24 - 39 |
| 3,4-Dimethylcyclopentan-1,2-dion | 21,4 | 21 - 21,7 |
| trans-4,5-Epoxy-(E)-2-decenal | 15,7 | 14,6 - 16,8 |
| (E,E)-2,4-Decadienal | 15 | 12 - 18 |
| (E)-2-Undecenal | 9,9 | 9,6 - 10,1 |
| (E)-2-Nonenal | 6,6 | 5,1 - 7,8 |
| (E,Z)-2,4-Decadienal | 5,6 | 4,3 - 6,3 |
| 3-Hydroxy-4,5-dimethyl-2(5H)-furanon (Sotolon) | 2,9 | 2,3 - 3,6 |
| (E,E)-2,4-Nonadienal | 1,5 | 1,4 - 1,6 |
| p-Kresol | 1,2 | 1,1 - 1-2 |
| (Z)-2-Nonenal | 0,91 | 0,81 - 1,0 |
| 1-Octen-3-on | 0,7 | 0,53 - 1,01 |
| 2-Acetyl-2-thiazolin | 0,35 | 0,31 - 0,38 |
| 2,3-Diethyl-5-methylpyrazin | 0,27 | 0,24 - 0,29 |
| (Z)-2-Decenal | 0,26 | - |
| 2-Acetyl-1-pyrrolin | 0,23 | 0,22 - 0,24 |
| 2-Aminoacetophenon | 0,14 | 0,10 - 0,18 |
| Ethyl-3-methylbutanoat | 0,08 | 0,07 - 0,09 |
| 2-Propionyl-1-pyrrolin | 0,07 | 0,05 - 0,08 |
| Bis(2-methyl-3-furyl)disulfid | < 0,004 | < 0,002 - < 0,006 |

a) Der Mittelwert ist hier der arithmetische Mittelwert einer Vielzahl möglicher Zusammensetzungen und gleichzeitig ein Optimum für die Zusammensetzung der Aromenkomposition.
b) Innerhalb dieses Schwankungsbereiches zeigen Aromenkompositionen den gewünschten Charakter. Bei Abweichungen über oder unter die Grenzwerte einzelner Stoffe verliert die Aromakomposition in der Regel ihren Charakter.

Der Ernährung oder dem Genuss dienende Zubereitungen im Sinne der Erfindung werden bevorzugt ausgewählt aus der Gruppe bestehend aus: Backwaren (z.B. Brot, Trockenkekse, Kuchen, sonstiges Gebäck), Getränke (z.B. Gemüsesäfte, Gemüsesaftzubereitungen), Instantgetränke (z.B. Instant-Gemüsegetränke), Fleischprodukte (z.B. Schinken, Frischwurst- oder Rohwurstzubereitungen, gewürzte oder marinierte Frisch- oder Pökelfleischprodukte, Brühen, Fonds, Fleischkonzentrate), Eier oder Eiprodukte (Trockenei, Eiweiß, Eigelb), Getreideprodukte (z.B. vorgegarte Fertigreis-Produkte, Reismehlprodukte, Hirse- und Sorghum-Produkte, rohe oder vorgegarte Nudeln und Pastaprodukte), Milchprodukte (z.B. Frischkäse, Weichkäse, Hartkäse, Milchgetränke, Molke, Butter, teilweise oder ganz hydrolysierte Milchprotein-haltige Produkte), Produkte aus Sojaprotein oder anderen Sojabohnen-Fraktionen (z.B. Sojamilch und daraus gefertigte Produkte, Sojalecithin-haltige Zubereitungen, fermentierte Produkte wie Tofu oder Tempe oder daraus gefertigte Produkte, Sojasoßen), Gemüsezubereitungen (z.B. Ketchup, Soßen, Trockengemüse, Tiefkühlgemüse, vorgegarte Gemüse, in Essig eingelegte Gemüse, Gemüsekonzentrate oder -pasten, eingekochte Gemüse, Kartoffelzubereitungen), Knabberartikel (z.B. gebackene oder frittierte Kartoffelchips oder Kartoffelteigprodukte, Brotteigprodukte, Extrudate auf Mais-, Reis- oder Erdnussbasis), Produkte auf Fett- und Ölbasis oder Emulsionen derselben (z.B. Mayonnaise, Remoulade, Dressings, Würzzubereitungen), sonstige Fertiggerichte und Suppen (z.B. Trockensuppen, Instant-Suppen, vorgegarte Suppen), Soßen (Instant-Soßen, Trockensoßen, Fertigsoßen), Gewürze oder Gewürzzubereitungen (z.B. Senfzubereitungen, Meerrettichzubereitungen), Würzmischungen sowie insbesondere Aufstreuwürzungen (englisch: Seasonings), die beispielsweise im Snackbereich Anwendung finden.

Die Zubereitungen im Sinne der Erfindung können auch in Form von Kapseln, Tabletten (nicht-überzogene sowie überzogene Tabletten, z.B. magensaftresistente Überzüge), Dragees, Granulaten, Pellets, Feststoffmischungen, Dispersionen in flüssigen Phasen, als Emulsionen, als Pulver, als Lösungen, als Pasten oder als andere schluck- oder kaubare Zubereitungen vorliegen, z. B. als Nahrungsergänzungsmittel.

Die erfindungsgemäßen Zubereitungen bzw. Halbfertigwaren werden vorzugsweise hergestellt, indem die Bestandteile der erfindungsgemäßen Aromakomposition in gegebenenfalls demineralisiertem und/oder gereinigtem Wasser oder in Ethanol oder Mischungen von Ethanol und Wasser gelöst und gemischt werden; anschließend können die Lösungen durch einen Trocknungsprozess, vorzugsweise einen Sprühtrocknungs-, Vakuumgefriertrockungs-, Umkehrosmose-, Eindampf- oder anderen Konzentrationsprozess oder eine Kombination der genannten Prozesse, in eine (zumindest nahezu) feste Zubereitung überführt. Dabei kann die Trocknung unter Zuhilfenahme von Trägerstoffen (z.B. Stärke, Stärkederivate, Maltodextrin, Kieselgel, siehe oben) oder Hilfsstoffen (z.B. Pflanzengummen, Stabilisierungsmittel), erfolgen. Vorzugsweise erfolgt die Trocknung mittels Sprühtrocknung oder Vakuumgefriertrocknung.

Bevorzugte erfindungsgemäße der Ernährung oder dem Genuss dienende Zubereitungen sowie deren Halbfertigwaren werden ausgewählt aus der Gruppe bestehend aus Würze, Würzmischungen, Würzmittel, Brühwürfel, Instant-Suppen, Instant-Soßen, vegetarische Fertiggerichte, fleischhaltige Fertiggerichte und Sojasoßen, insbesondere jeweils von der Geschmacksrichtung vom Typ "Huhn", bevorzugt "Double Boiled Chicken".

Besonders bevorzugt sind erfindungsgemäße Zubereitungen, bei denen die Matrix so gewählt ist, dass die erfindungsgemäße Aromakompositionen verzögert von der Matrix freigegeben werden, so dass eine verzögerte und damit länger anhaltende Wirkung erreicht wird. Als Matrix können hier z.B. natürliche Fette, natürliche Wachse (z.B. Bienenwachs, Carnaubawachs) oder auch natürliche Ballaststoffe (Weizenfasern, Apfelfasern, Haferfasern, Orangenfasern) verwendet werden.

Weitere Bestandteile einer erfindungsgemäßen, der Ernährung, der Mundpflege oder dem Genuss dienenden verzehrfertigen Zubereitung bzw. Halbfertigware sind üblicherweise geeignete Grund-, Hilfs- und Zusatzstoffe für Mundpflege, Nahrungs- oder Genussmittel. Diese werden bevorzugt ausgewählt aus der Gruppe bestehend aus: z.B. Wasser, Gemische frischer oder prozessierter, pflanzlicher oder tierischer Grund- oder Rohstoffe (z.B. rohes, gebratenes, getrocknetes, fermentiertes, geräuchertes und/oder gekochtes Fleisch, Knochen, Knorpel, Fisch, Gemüse, Kräuter, Nüsse, Gemüsesäfte oder -pasten oder deren Gemische), Zuckeralkohole (z.B. Sorbit, Erythritol), natürliche oder gehärtete Fette (z.B. Talg, Schmalz, Palmfett, Kokosfett, gehärtetes Pflanzenfett), Öle (z.B. Sonnenblumenöl, Erdnussöl, Maiskeimöl, Olivenöl, Fischöl, Sojaöl, Sesamöl), Fettsäuren oder deren Salze (z.B. Kaliumstearat), Peptide, die nicht N^{α}-β-Alanyl-Dipeptide darstellen (z.B. Glutathion), native oder prozessierte Proteine (z.B. Gelatine), Enzyme (z.B. Peptidasen), Geschmackskorrigenzien für unangenehme Geschmackseindrücke, weitere Geschmacksmodulatoren für weitere, in der Regel nicht unangenehme Geschmackseindrücke, andere geschmacksmodulierende Stoffe, Emulgatoren (z.B. Lecithine, Diacylglycerole, Gummi arabicum), Stabilisatoren (z.B. Carrageenan, Alginat), Konservierungsstoffe (z.B. Benzoesäure und deren Salze, Sorbinsäure und deren Salze), Antioxidantien (z.B. Tocopherol, Ascorbinsäure), Chelatoren (z.B. EDTA), Bitterstoffe (z.B. Chinin, Coffein, Limonin, Amarogentin, Humolone, Lupolone, Catechine, Tannine), die enzymatische Bräunung verhindernde Stoffe (z.B. Sulfit, Ascorbinsäure), ätherische Öle, Pflanzenextrakte, natürliche oder synthetische Farbstoffe oder Farbpigmente (z.B. Carotinoide, Flavonoide, Anthocyane, Chlorophyll und deren Derivate), Gewürze, trigeminal wirksame Stoffe oder Pflanzenextrakte, enthaltend solche trigeminal wirksamen Stoffe oder Riechstoffe sowie Geruchskorrigentien.

### Ausführungsbeispiele:

Die vorliegende Erfindung wird im Folgenden durch Ausführungsbeispiele beschrieben, die jedoch den Schutzumfang der erfindungsgemäßen Gegenstände nicht beschränken.

### Beispiel 1: Hühnerbrühe, hergestellt nach dem "Double Boiled"-Verfahren (nicht erfindungsgemäß)

In den Tontopfeinsatz des Double Boilers wurde pro Brühenzubereitung ein halbes Huhn (ca. 1 kg) mit 1,5 L Leitungswasser gegeben. Der Tontopfeinsatz wurde mit einem Tondeckel abgedeckt und in den Double Boiler eingesetzt. Der Zwischenraum von Tontopf und Gefäßwand des Double Boilers wurde mit Wasser befüllt und zuletzt wurde der Double Boiler mit einem Deckel verschlossen. Nach beendeter Kochzeit von 24 h wurde das Huhn aus der Brühe entfernt, das Fett aus der noch lauwarmen Brühe mit Hilfe eines Scheidetrichters nahezu vollständig abgetrennt und anschließend das Volumen auf je 1,5 L mit Wasser eingestellt. Die Brühe wurde homogenisiert und portioniert tiefgefroren.

Das Geschmacksprofil von "Double Boiled Chicken" weist hohe Intensitäten für die Deskriptoren umami, sauer, Mundfülle und Viskosität auf, während bitter und süß nicht von Bedeutung sind (siehe auch Figur 1).

### Beispiel 2: Aromakompositionen für eine rekonstituierte Hühnerbrühe

A: Rekonstituat ohne N^{α}-β-Alanyl-Dipeptide als Vergleich
B: Rekonstituat ohne Genusssäuren als Vergleich
C: Rekonstituat ohne anorganische Salze als Vergleich
D: erfindungsgemäße Aromakomposition (vollständiges Rekonstituat)
E: erfindungsgemäße Aromakomposition
F: erfindungsgemäße Aromakomposition ohne L-Carnosin, L-Anserin, L-Balenin

**Beispiel 3: Rekonstituierte Brühen vom Typ "Double Boiled Chicken"**

| Einsatzstoff | Zubereitung (Angaben in g/kg Aromakomposition) | | | | | |
|---|---|---|---|---|---|---|
| | A | B | C | D | E | F |
| **N**^{α}**-**β**-AlanyIDipeptide (Komponente i.)** | | | | | | |
| β-Ala-Glycin | - | 115,61 | 162,11 | 95,60 | 142,84 | 177,27 |
| β-Ala-L-Tryptophan | - | 0,04 | 0,06 | 0,03 | - | 0,06 |
| β-Ala-L-Lysin | - | 0,03 | 0,04 | 0,03 | - | 0,05 |
| **Nukleoside/Nukleotide (Komponente ii. (d))** | | | | | | |
| 3',5'-cAMP | 0,08 | 0,08 | 0,11 | 0,07 | - | - |
| 5'-AMP | 3,36 | 3,15 | 4,41 | 2,60 | 3,89 | 4,83 |
| 5'-CMP | 0,34 | 0,31 | 0,44 | 0,26 | - | - |
| 5'-GMP | 0,59 | 0,55 | 0,77 | 0,46 | - | - |
| 5'-IMP | 10,17 | 9,52 | 13,35 | 7,87 | 11,77 | 14,60 |
| 5'-UMP | 0,17 | 0,16 | 0,22 | 0,13 | - | - |
| 5'-XMP | 0,08 | 0,08 | 0,11 | 0,07 | - | - |
| Adenosin | 0,42 | 0,39 | 0,55 | 0,33 | - | - |
| Guanosin | 0,34 | 0,31 | 0,44 | 0,26 | - | - |
| Hypoxanthin | 8,66 | 8,11 | 11,37 | 6,70 | - | - |
| Inosin | 17,48 | 16,37 | 22,95 | 13,54 | - | - |
| Xanthin | 0,92 | 0,87 | 1,21 | 0,72 | - | - |
| **Aminosäuren (Komponente ii. (a))** | | | | | | |
| 4-L-Hydroxyprolin | 0,25 | 0,24 | 0,33 | 0,20 | - | - |
| Arginin | 7,56 | 7,08 | 9,93 | 5,86 | - | - |
| α-L-Aminoadipinsäure | 0,84 | 0,79 | 1,10 | 0,65 | - | - |
| L-Asparagin | 2,44 | 2,28 | 3,20 | 1,89 | - | - |
| L-Asparaginsäure | 7,14 | 6,69 | 9,38 | 5,53 | 8,27 | 10,26 |
| L-Citrullin | 0,08 | 0,08 | 0,11 | 0,07 | - | - |
| L-Cystein | 1,34 | 1,26 | 1,77 | 1,04 | - | - |
| L-Glutamin | 7,14 | 6,69 | 9,38 | 5,53 | - | - |
| L-Glutaminsäure | 22,52 | 21,09 | 29,57 | 17,44 | 26,06 | 32,34 |
| L-Histidin | 11,01 | 10,31 | 14,46 | 8,52 | - | - |
| Glycin | 3,78 | 3,54 | 4,97 | 2,93 | - | - |
| L-Isoleucin | 5,04 | 4,72 | 6,62 | 3,90 | - | - |
| L-Alanin | 5,71 | 5,35 | 7,50 | 4,43 | - | - |
| L-Leucin | 4,87 | 4,56 | 6,40 | 3,77 | - | - |
| L-Prolin | 1,85 | 1,73 | 2,43 | 1,43 | - | - |
| L-Serin | 4,96 | 4,64 | 6,51 | 3,84 | - | - |
| L-Threonin | 3,03 | 2,83 | 3,97 | 2,34 | - | - |
| L-Lysin | 30,25 | 28,33 | 39,73 | 23,43 | - | - |
| L-Methionin | 2,19 | 2,05 | 2,87 | 1,69 | - | - |
| L-Phenylalanin | 3,78 | 3,54 | 4,97 | 2,93 | - | - |
| Taurin | 69,67 | 65,24 | 91,48 | 53,95 | 80,61 | 100,04 |
| L-Tryptophan | 0,84 | 0,79 | 1,10 | 0,65 | - | - |
| L-Tyrosin | 3,45 | 3,23 | 4,52 | 2,67 | - | - |
| L-Valin | 1,85 | 1,73 | 2,43 | 1,43 | - | - |
| **Genusssäuren (Komponente ii. c))** | | | | | | |
| Äpfelsäure | 6,72 | - | 8,83 | 5,21 | - | - |
| Bernsteinsäure | 12,86 | - | 16,88 | 9,96 | 14,88 | 18,46 |
| Citronensäure | 1,09 | - | 1,43 | 0,85 | - | - |
| Essigsäure | 1,51 | - | 1,99 | 1,17 | - | - |
| Milchsäure | 201,36 | - | 264,40 | 155,92 | 230,36 | 285,87 |
| **Anorganische Salze (Komponente ii. (b))** | | | | | | |
| CaCl₂·H₂O | 18,66 | 17,47 | - | 14,45 | - | - |
| HCl (1 mol/L) | 168,08 | 157,39 | - | 130,15 | 194,48 | 241,34 |
| KH₂PO₄ | 174,89 | 163,77 | - | 135,42 | - | - |
| KOH | 66,06 | 61,86 | - | 51,15 | - | - |
| MgCl₂·6 H₂O | 22,19 | 20,78 | - | 17,18 | - | - |
| NaCl | 41,77 | 39,11 | - | 32,34 | 48,33 | 59,97 |
| NH₄Cl | 38,24 | 35,81 | - | 29,61 | 44,24 | 54,91 |
| **Kohlenhydrate (Komponente iii. (e))** | | | | | | |
| Fructose | 0,92 | 0,87 | 1,21 | 0,72 | - | - |
| Glucose | 0,42 | 0,39 | 0,55 | 0,33 | - | - |
| Saccharose | 0,76 | 0,71 | 0,99 | 0,59 | - | - |
| Lactose | 0,25 | 0,24 | 0,33 | 0,20 | - | - |
| **weitere N**^{α}**-**β**-Alanyl-Dipeptide** | | | | | | |
| L-Anserin | - | 105,22 | 147,54 | 87,01 | 130,01 | - |
| L-Carnosin | - | 52,02 | 72,94 | 43,01 | 64,27 | - |

A': Brühe ohne N^{α}-β-Alanyl-Dipeptide als Vergleich
B': Brühe ohne Genusssäuren als Vergleich
C': Brühe ohne anorganische Salze als Vergleich
D': erfindungsgemäße Brühe (vollständiges Rekonstituat)
E': erfindungsgemäße Brühe
F': erfindungsgemäße Brühe ohne L-Carnosin, L-Anserin, L-Balenin

| Einsatzstoff | Zubereitung (Angaben in g) | | | | | |
|---|---|---|---|---|---|---|
| | A' | B' | C' | D' | E' | F' |
| Aromakomposition A Aus Beispiel 2 | 11,899 | | | | | |
| Aromakomposition B Aus Beispiel 2 | | 12,707 | | | | |
| Aromakomposition C Aus Beispiel 2 | | | 9,062 | | | |
| Aromakomposition D Aus Beispiel 2 | | | | 15,367 | | |
| Aromakomposition E Aus Beispiel 2 | | | | | 10,284 | |
| Aromakomposition F Aus Beispiel 2 | | | | | | 8,287 |
| Wasser, deionisiert | auf 1L auffüllen | auf 1L auffüllen | auf 1L auffüllen | auf 1L auffüllen | auf 1L auffüllen | auf 1L auffüllen |
| KOH-Lösung 0,1 %ig | q.s. | q.s. | q.s. | q.s. | q.s. | q.s. |
| Gelatine | 8,900 | 8,900 | 8,900 | 8,900 | 8,900 | 8,900 |

Die jeweiligen Aromakompositionen A bis F werden bis auf die Gelatine und die KOH-Lösung eingewogen, mit Wasser auf 900 ml aufgefüllt, mit der KOH-Lösung auf pH 6,5 gebracht, mit Wasser auf 1000 ml aufgefüllt und anschließend unter leichtem Erwärmen die Gelatine eingerührt.

### Beispiel 4: Vergleich der Brühen aus Beispiel 3 mit Hühnerbrühe aus Beispiel 1, hergestellt nach dem "Double Boiled"-Verfahren

Die sensorischen Untersuchungen wurden mit einer Gruppe von sechs trainierten Experten durchgeführt. Es wurden die rekonstruierten Brühen A' -F' aus Beispiel 3 sowie die nach Beispiel 1 hergestellte Brühe anhand der Geschmacksqualitäten sauer, bitter, salzig, süß und umami sowie der Viskosität und der Mundfülle verglichen. Die Bewertung erfolgte anhand einer Skala von 0 (nicht wahrnehmbar) bis 5 (stark wahrnehmbar). Als Vergleiche standen folgende wässrige Lösungen (pH 6,0) während der sensorischen Untersuchungen zur Verfügung: Saccharose (50 mmol/L) für süß, Milchsäure (20 mmol/L) für sauer, Coffein (1 mmol/L) für bitter, Mononatriumglutamat (3 mmol/L) für umami, Natriumchlorid (20 mmol/L) für salzig sowie Gelatine (0,5 %) zur Bewertung der Viskosität. Die Beurteilung der Mundfülle erfolgte im Vergleich zur Steigerung der Mundfülle, die durch einen Zusatz von Glutathion (reduzierte Form, 5 mmol/L) zu Hühnerbrühe (beide Lösungen pH 6,5) verursacht wird.

Figur 1 zeigt ein Geschmacksnetz anhand dessen das Geschmacksprofil für die Hühnerbrühe aus Beispiel 1 dargestellt wird. Figur 2 zeigt ein Geschmacksnetz anhand dessen das Geschmacksprofil der Aromakomposition D aus Beispiel 2 dargestellt wird. Die Geschmacksprofile der Hühnerbrühe und der Aromakomposition D sind folglich übereinstimmend.

Weiterhin wurde ein Fehlen aller erfindungsgemäß zu verwendender N^{α}-β-Alanyl-Dipeptide in Brühe A' aus Beispiel 3 von allen Panellisten festgestellt, dabei wurde vor allem eine wesentlich geringere Mundfülle und eine Abnahme des in Vergleichsbrühe nach Beispiel 1 typischen weißfleischigen Charakters beschrieben. Dabei haben L-Anserin und L-Carnosin nur einen vernachlässigbaren Einfluss, während insbesondere β-Alanyl-glycin wichtig für ein vergleichbares Geschmacksprofil ist.

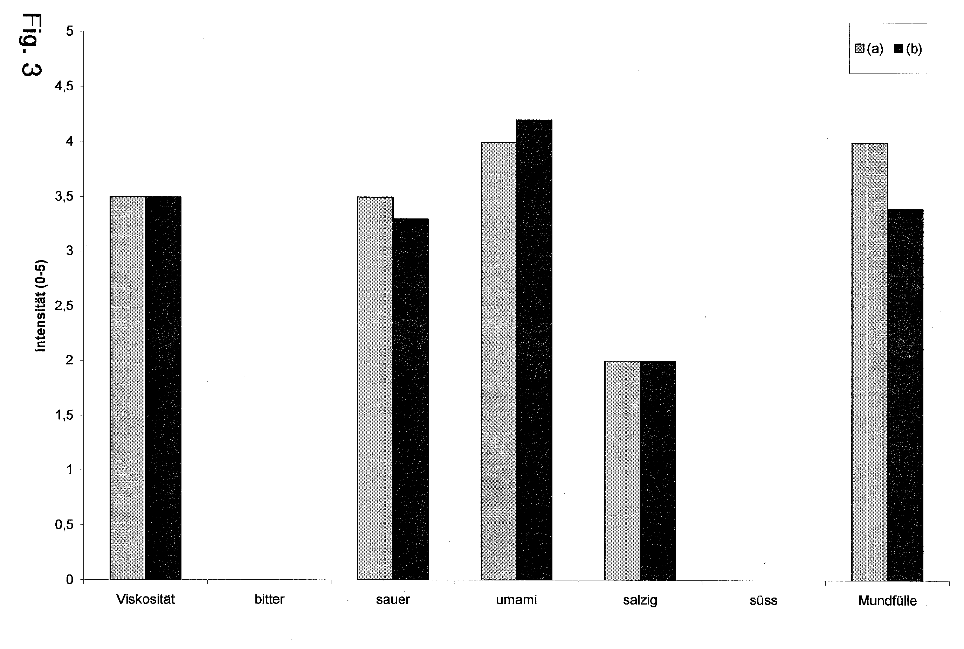

Figur 3 zeigt exemplarisch einen Vergleich des Geschmacksprofils für die Hühnerbrühe aus Beispiel 1 (a) mit der rekonstruierten Brühe F' aus Beispiel 3 (b).

Ein Weglassen der Genussäuren (Brühe B' aus Beispiel 3) wirkte sich nicht nur auf den Sauergeschmack (3,5 auf einen Wert von 1,8) aus, auch Mundfülle (3,8 auf einen Wert von 3,2) und umami (4 auf einen Wert von 2) wurden im Vergleich zu der Vergleichsbrühe nach Beispiel 1 abgeschwächt.

Für die Gruppe der anorganischen Salze wurde ein hoher Beitrag zu Geschmack gefunden, das Fehlen dieser Substanzen in Brühe C' aus Beispiel 3 führte zu einem fast vollständigen Verlust des Geschmacks im Vergleich zu der Vergleichsbrühe nach Beispiel 1.

**Beispiel 5: Herstellung von Aromamischungen durch Kombination flüchtiger Aromastoffe**

| Einsatzstoff | Aromamischung gemäß Gruppe iv. der Aromakomposition (Angaben in g/kg Aromamischung) | |
|---|---|---|
| | a | b |
| Essigsäure | 495,52658 | |
| Buttersäure | 2,79607 | 10,8000 |
| Acetaldehyd | 0,79999 | |
| 2/3-Methylbuttersäure | 0,24388 | 1,8000 |
| 4-Hydroxy-2,5-dimethyl-3(2H)-furanon (Furaneol) | 0,17553 | 1,1700 |
| Hexanal | 0,16000 | 10,0000 |
| Vanillin | 0,06835 | |
| (E)-2-Decenal | 0,05437 | 1,4000 |
| 3-(Methylthio)-propanal | 0,04660 | 0,2100 |
| 3,4-Dimethylcyclopentan-1,2-dion | 0,03324 | 0,0900 |
| trans-4,5-Epoxy-(E)-2-decenal | 0,02439 | 0,0600 |
| (E,E)-2,4-Decadienal | 0,02330 | 7,0000 |
| (E)-2-Undecenal | 0,01538 | 0,0400 |
| (E)-2-Nonenal | 0,01025 | 0,0270 |
| (E,Z)-2,4-Decadienal | 0,00870 | |
| 3-Hydroxy-4,5-dimethyl-2(5H)-furanon (Sotolon) | 0,00450 | 0,0150 |
| (E,E)-2,4-Nonadienal | 0,00233 | 3,2000 |
| p-Kresol | 0,00186 | |
| (Z)-2-Nonenal | 0,00141 | |
| 1-Octen-3-on | 0,00109 | 0,0040 |
| 2-Acetyl-2-thiazolin | 0,00054 | 0,0010 |
| 2,3-Diethyl-5-methylpyrazin | 0,00042 | 0,0150 |
| (Z)-2-Decenal | 0,00040 | |
| 2-Acetyl-1-pyrrolin | 0,00036 | |
| 2-Aminoacetophenon | 0,00022 | |
| Ethyl-3-methylbutanoat | 0,00012 | |
| 2-Propionyl-1-pyrrolin | 0,00011 | |
| Bis(2-methyl-3-furyl)disulfid | 0,00001 | 0,0100 |
| 2,6-Dimethylthiophenol | | 0,6000 |
| Ölsäure | | 50,0000 |
| Methyltetrahydrofuranthiol | | 0,4500 |
| 2-(4-methyl-1,3-thiazol-5-yl)ethanol (Sulfurol) | | 40,0000 |
| 2-Acetylthiazol | | 0,2100 |
| Thiophenol | | 0,1450 |
| 2-Acetylpyridin | | 1,0800 |
| Caprinsäure | | 9,0000 |
| 2-Methylfuran-3-thiol | | 0,2500 |
| 2-Merccaptobutanon | | 0,4600 |
| Tetrahydrothiophen-3-on | | 4,0000 |
| 2-Methylthiophenol | | 3,5000 |
| 1-Octen-3-ol | | 3,0000 |
| 3-Thiobutan-2-on | | 0,2000 |
| 3-Thio-2-methylpentanol | | 0,1800 |
| 5-Methyl-2-ethylpyrazin | | 1,0000 |
| 2,3,5-Trimethylpyrazin | | 0,8000 |
| 2E,4E-Undecadienal | | 0,3000 |
| δ-Undecalacton | | 0,3000 |
| 5-Methyl-2-ethylpyrazin | | 0,0001 |
| Pflanzenöltriglyceride | 500,00000 | 848,683 |

Die jeweiligen Aromastoffe werden gemischt und in den Pflanzenöltriglyceriden gelöst.

### Beispiel 6: Sprühgetrocknete Aromakomposition durch Kombination flüchtiger Aromastoffe mit Aromakompositionen aus Beispiel 2

| Einsatzstoff | Aromakomposition | (Angaben in g) |
|---|---|---|
| | G | H |
| Teil | | |
| Aromamischung a) aus Beispiel 5 | 250 | - |
| Aromamischung b) aus Beispiel 5 | - | 250 |
| Maltodextrin DE17-20 | 800 | 800 |
| Stärke Wachsmais Capsul | 250 | 250 |
| Wasser (Trinkwasserqualität) | 1500 | 1500 |

| Teil II | | |
|---|---|---|
| Aromakomposition B aus Beispiel 2 | 500 | |
| Aromakomposition E aus Beispiel 2 | - | 500 |
| Maltodextrin DE5-10 | 440 | 440 |
| Gummi arabicum | 50 | 50 |
| Wasser (Trinkwasserqualität) | 2000 | 2000 |
| *Ausbeute* | | |
| *Aromakomposition nach Sprühtrocknung und Mischung* | *2290* | *2290* |

Teil I wird gemischt und sprühgetrocknet; ebenso wird getrennt mit Teil II verfahren. Durch Mischung der trockenen Teile I und II erhält man die fertige Aromamischung.

## Patentansprüche

1. Aromakomposition umfassend oder bestehend aus
i. ein, zwei, drei, vier oder fünf N^{α}-β-Alanyl-Dipeptiden, ausgewählt aus der Liste bestehend aus: β-Alanyl-L-tryptophan, β-Alanyl-L-lysin, β-Alanyl-glycin, β-Alanyl-L-alanin und/oder β-Alanyl-L-phenylalanin,
und
ii. ein, zwei, drei oder mehrere Verbindungen jeweils ausgewählt aus (a) Aminosäuren sowie deren Salze und Solvate, (b) zur Ernährung geeigneten anorganischen Salzen sowie deren Solvate und (c) mono- oder polyvalenten organischen Genusssäuren sowie deren Stereoisomere, Salze und/oder Solvate.

2. Aromakomposition gemäß Anspruch 1, **dadurch gekennzeichnet, dass**
(a) die Aminosäuren ausgewählt werden aus der Gruppe bestehend aus Glycin, L-Alanin, L-Valin, L-Leucin, L-Isoleucin, L-Glutaminsäure, Pyroglutaminsäure, L-Glutamin, L-Asparaginsäure, L-Asparagin, L-Serin, L-Homoserin, L-Threonin, L-Phenylalanin, L-Tyrosin, L-Tryptophan, L-Histidin, L-Lysin, L-Arginin, L-Methionin, L-Prolin, L-Hydroxyprolin, L-Cystein, L-Cystin, L-Homocystein, L-Citrullin, L-Ornithin, α-L-Aminoadipinsäure, γ-Aminobuttersäure und/oder Taurin
und/oder
(b) das oder die zur Ernährung geeigneten anorganischen Salze ausgewählt werden aus der Gruppe bestehend aus Natrium-, Kalium-, Calcium-, Magnesium und/oder Ammoniumsalzen mit mono- oder polyvalenten anorganischen Gegenionen
und/oder
(c) die organischen Genusssäuren ausgewählt werden aus der Gruppe bestehend aus Milchsäure, Propionsäure, Citronensäure, Bernsteinsäure, Fumarsäure, Maleinsäure, Äpfelsäure und deren Isomere, Traubensäure, Weinsäure und deren Isomere, Malonsäure, Glutarsäure, Schleimsäure und/oder Hydroxyzitronensäure.

3. Aromakomposition gemäß Anspruch 2, **dadurch gekennzeichnet, dass** das oder die Gegenionen in Komponente ii) (c) ausgewählt werden aus der Gruppe bestehend aus Hydroxiden, Phosphaten, Hydrogenphosphaten, Dihydrogenphosphaten, Pyrophosphaten, Hydrogenpyrophosphaten, Polyphosphaten, Chloriden, Carbonaten, Bicarbonaten, Sulfaten, Hydrogensulfaten, Nitriten und/oder Nitraten.

4. Aromakomposition gemäß einem der vorstehenden Ansprüche, **dadurch gekennzeichnet, dass**
(a) die Aminosäuren ausgewählt werden aus der Gruppe bestehend aus L-Asparaginsäure, L-Glutaminsäure und/oder Taurin
und/oder
(b) das oder die zur Ernährung geeigneten anorganischen Salze ausgewählt werden aus der Gruppe bestehend aus Kaliumdihydrogenphosphat, Kaliumhydroxid gegebenenfalls partiell neutralisiert mit Salzsäure, Natriumchlorid und/oder Ammoniumchlorid
und/oder
(c) die organische Genusssäure Milchsäure ist.

5. Aromakomposition gemäß einem der vorstehenden Ansprüche, **dadurch gekennzeichnet, dass** die Aromakomposition zusätzlich ein oder mehrere folgende Komponenten umfasst oder daraus besteht:
iii. ein, zwei, drei oder mehrere Verbindungen ausgewählt aus der Gruppe bestehend aus (d) Nukleosiden und/oder Nukleotiden und/oder (e) Kohlenhydraten,
und/oder
iv. ein, zwei, drei oder mehrere Aromastoffe.

6. Aromakomposition gemäß Anspruch 5, **dadurch gekennzeichnet, dass**
(d) das oder die Nukleoside und/oder Nukleotide ausgewählt werden aus der Gruppe bestehend aus Adenin, Adenosin, Cytosin, Cytidin, Guanin, Guanosin, Uracil, Uridin, Thymin, Thymidin, Inosin, Xanthin, Xanthosin, Hypoxanthin, 3'-IMP, 5'-IMP, 3'-AMP, 5'-AMP, 3'-GMP, 5'-GMP, 3'-UMP, 5'-UMP, 3'-CMP, 5'-CMP, 3'-XMP, 5'-XMP, 3',5'-cAMP, 3',5'-cIMP, 3',5'-cUMP, 3',5'-cCMP, 3',5'-cGMP, ADP, ATP, UDP, UTP, GDP, GTP, CDP, CTP, 3'-dIMP, 5'-dIMP, 3'-dAMP, 5'-sAMP, 3'-sGMP, 5'-sGMP, 3'-sTMP, 5'-dTMP, 3'-dCMP, 5'-dCMP, 3',5'-cdAMP, 3',5'-cdTMP, 3',5'-cdCMP, 3',5'-cdGMP, 3'-dXMP, 5'-dXMP, dADP, dATP, dUDP, dTTP, dGDP, dGTP und/oder dCDP, dCTP
und/oder
(e) das oder die Kohlenhydrate ausgewählt werden aus der Gruppe bestehend aus D-Glucose, D-Fructose, Sorbose, Tagatose, Ribose, Arabinose, Saccharose, Maltose, Maltobiose, Maltotriose, Lactose, Galactose und/oder Mannose
und/oder
iv. der oder die Aromastoffe ausgewählt werden aus der Gruppe bestehend aus flüchtigen organischen Säuren (gesättigt und ungesättigt); Alkoholen (gesättigt und ungesättigt); Sulfiden und Disulfiden; Thiolen; Pyridinen; Pyrazinen; Thiazolen; Thiazolinen; Pyrrolinen; Aldehyden; Ketonen; Estern und Lactonen; und/oder heterocyclischen Aromaten.

7. Aromakomposition gemäß einem der vorstehenden Ansprüche, **dadurch gekennzeichnet, dass** das Gewichtsverhältnis von dem oder den N^{α}-β-Alanyl-Dipeptiden der Gruppe i. zu der Summe der Verbindungen der Gruppe ii. im Bereich von 50 : 1 bis 1 : 50 liegt.

8. Zubereitung, die der Ernährung und/oder dem Genuss dient, sowie Halbfertigware für eine Zubereitung, die der Ernährung und/oder dem Genuss dient, **dadurch gekennzeichnet, dass** die Zubereitung oder Halbfertigware folgende Komponenten umfasst oder daraus besteht:
(i) eine geschmacklich wirksame Menge einer oder mehrerer Aromakompositionen gemäß einem der Ansprüche 1 bis 7 und
(ii) ein oder mehrere geeignete Grund-, Hilfs- und/oder Zusatzstoffe.

9. Zubereitung und Halbfertigware gemäß Anspruch 8, **dadurch gekennzeichnet, dass** die Zubereitung und Halbfertigware sprühgetrocknet ist.

10. Zubereitung und Halbfertigware gemäß Anspruch 8 oder 9, **dadurch gekennzeichnet, dass** die Grund-, Hilfs- und/oder Zusatzstoffe der Komponente (ii) ein oder mehreren feste Trägerstoffe umfassen oder daraus bestehen.

11. Verwendung von β-Alanyl-L-tryptophan als Geschmackstoff.

12. Verwendung von a) ein, zwei, drei, vier oder mehreren N^{α}-β-Alanyl-Dipeptiden ausgewählt aus der Gruppe bestehend aus β-Alanyl-L-tryptophan, β-Alanyl-L-lysin, β-Alanyl-glycin, β-Alanyl-L-alanin und/oder β-Alanyl-L-phenylalanin oder b) der Aromakomposition gemäß einem der Ansprüche 1 bis 7 zum Erzeugen, Verstärken oder Modifizieren eines Huhngeschmacks.

13. Verwendung der N^{α}-β-Alanyl-Dipeptide oder Aromakomposition gemäß Anspruch 12 zum Erzeugen, Verstärken oder Modifizieren des "Double Boiled Chicken"-Geschmacks.

14. Verwendung von a) ein, zwei, drei, vier oder mehreren N^{α}-β-Alanyl-Dipeptiden ausgewählt aus der Gruppe bestehend aus β-Alanyl-L-tryptophan, β-Alanyl-L-lysin, β-Alanyl-glycin, β-Alanyl-L-alanin und/oder β-Alanyl-L-phenylalanin oder b) der Aromakomposition gemäß einem der Ansprüche 1 bis 7 zur Herstellung von Zubereitungen und Halbfertigwaren gemäß einem der Ansprüche 8 bis 10.

15. Verfahren zum Erzeugen, Verstärken oder Modifizieren eines Huhngeschmacks einer Zubereitung oder Halbfertigware gemäß einem der Ansprüche 8 bis 10, **dadurch gekennzeichnet, dass** das Verfahren folgende Schritte umfasst oder daraus besteht:
a) Bereitstellen einer oder mehrerer Aromakompositionen gemäß einem der Ansprüche 1 bis 7,
b) Bereitstellen eines oder mehrerer Grund-, Hilfs- und/oder Zusatzstoffe und
c) Vermischen einer geschmacklich wirksamen Menge des oder der Aromakompositionen aus Schritt a) mit dem oder den Grund-, Hilfs- und/oder Zusatzstoffen gemäß Schritt b) oder
d) Sprühtrocknung einer geschmacklich wirksamen Menge des oder der Aromakompositionen aus Schritt a) mit dem oder den Grund-, Hilfs- und/oder Zusatzstoffen gemäß Schritt b).
